# EUROPEAN PATENT APPLICATION

(11) **EP 3 871 948 A1**
(43) Date of publication of application: **01.09.2021**
(21) Application number: 20159630.1
(22) Date of filing: 26.02.2020
(51) Int. Cl.: B62B 3/00, B62B 5/00, B62B 5/06, B62B 3/02, B62B 3/10, A45C 3/04, A45C 7/00, A45C 5/14

(54) **CART AND METHOD OF USE**

(71) Applicant: Lavi, Moshe, 53111 Givataim (IL)
(72) Inventor: LAVI, MOSHE, 53111 Givataim (IL); LAVI, AVRAHAM, 5320053 Givataim (IL)
(74) Representative: Pearl Cohen Zedek Latzer Baratz UK LLP

(57) **Abstract**

A cart (600) includes a flat base (602), at least three wheels (602A, 602B) coupled to the flat base (602) onto one flat side of it and a flexible casing (604) coupled to the flat base (602) along a circumference of the flat base (602). The flexible casing (604) is extendable in a direction that is substantially perpendicular to the flat base (602) between a first casing position and a second casing position.

## Description

### FIELD OF THE INVENTION

The present invention relates to the field of carts, and more particularly, to foldable/collapsible carts.

### BACKGROUND OF THE INVENTION

A typical urban inhabitant needs, on an almost daily basis, to carry loads from shops/malls and the like to his/her apartment and often finds it hard to convey such loads whether he/she is using a private vehicle or uses a public commuting service. Shopping carts are well known and may be used by bringing the cart from home, loading the purchased goods on it, conveying the goods to the vehicle or the public commuting service, and then conveying the goods from the vehicle or the public commuting service to his/her apartment. When a private vehicle is used, very often the shopping cart is bulky and hard to load into the vehicle, especially when the vehicle's trunk is loaded with the purchased goods.

There is a need for a means for conveying purchased goods to and from a vehicle, which means will occupy very little room when folded and will provide safe and easy conveying facility for the goods when in use, and finally will enable storing it (in its folded position) in a trunk that is already loaded with goods, by occupying very little room and being adapted to be placed in the trunk easily.

### SUMMARY OF THE INVENTION

One aspect of the present invention provides a cart including: a flat base; at least three wheels coupled to the flat base onto one flat side of it; a flexible casing coupled to the flat base along a circumference of the flat base, the flexible casing being extendable in a direction that is substantially perpendicular to the flat base between a first casing position and a second casing position.

These, additional, and/or other aspects and/or advantages of the present invention are set forth in the detailed description which follows; possibly inferable from the detailed description; and/or learnable by practice of the present invention.

### BRIEF DESCRIPTION OF THE DRAWINGS

For a better understanding of embodiments of the invention and in order to show how the same can be carried into effect, reference will now be made, purely by way of example, to the accompanying drawings in which like numerals designate corresponding elements or sections throughout.

In the accompanying drawings:
Figures 1A, 1B and 1C are schematic illustrations of a cart, according to some embodiments of the invention;
Figures 2A and 2B, Figures 2C and 2D, Figures 2E and 2F, and Figures 2G and 2H are schematic illustrations of various configurations of a handle for a cart, according to some embodiments of the invention;
Figure 3 is a schematic illustration of a cart carrying relatively large load as compared to dimensions the cart, according to some embodiments of the invention;
Figures 4A, 4B and 4C are schematic illustrations of a cart including various configurations of a flexible casing and carrying multiple items, according to some embodiments of the invention; and
Figures 5A, 5B, 5C, 5D, 5E and 5F are schematic illustrations of a cart including at least two first wheels and at least two second wheels, according to some embodiments of the invention.

It will be appreciated that, for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention are described. For purposes of explanation, specific configurations and details are set forth in order to provide a thorough understanding of the present invention. However, it will also be apparent to one skilled in the art that the present invention can be practiced without the specific details presented herein. Furthermore, well known features can have been omitted or simplified in order not to obscure the present invention. With specific reference to the drawings, it is stressed that the particulars shown are by way of example and for purposes of illustrative discussion of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention can be embodied in practice.

Before at least one embodiment of the invention is explained in detail, it is to be understood that the invention is not limited in its application to the details of construction and the arrangement of the components set forth in the following description or illustrated in the drawings. The invention is applicable to other embodiments that can be practiced or carried out in various ways as well as to combinations of the disclosed embodiments. Also, it is to be understood that the phraseology and terminology employed herein is for the purpose of description and should not be regarded as limiting.

Generally, a cart is disclosed. According to some embodiments, the cart may include a flat base, at least three wheels coupled to the flat base to enable easy rolling and pulling the base (and any loads placed on it) on the ground, pavement, floor and the like, and a flexible casing coupled to the flat base along a circumference of the flat base. The flexible casing may be extendable/unfoldable between a first (collapsed/folded) position and a second (extended/unfolded) position in a direction that is substantially perpendicular to the flat base.

According to some embodiments, the flexible casing may be made with a desired flexibility and/or foldability measure(s) to thereby ensure that, when the flexible casing is in the first (collapsed/folded) position, its addition to a total thickness of the cart above a thickness of the flat base is negligible (e.g., no more than 15% of the thickness of the base.

In various embodiments, the cart may be used to carry/transport various loads having various dimensions. For example, relatively large items (as compared to dimensions of the cart), such as packings, may be loaded on the flat base over the flexible casing in its collapsed/folded position. In another example, the flexible casing may be extended/unfolded from the first (collapsed/folded) position to the second (extended/unfolded) position to at least partly envelope/receive/accommodate multiple relatively small items (as compared to dimensions of the cart), such as supermarket items, and to prevent falling of the one or more of the multiple items thereof from the cart during transportation.

According to some embodiments, the cart may be kept/stored within a trunk of a family cart, mainly due to the fact that the flexible casing adds negligible thickness to a total thickness of the cart when in the first (collapsed/folded) position. In some embodiments, the cart may be part of a kit further including a support installable in the trunk of the car (or other storing location such as home) and adapted to support the cart thereof. In some other embodiments, the support may be adapted to be installed on the bottom of a car, e.g., under the trunk.

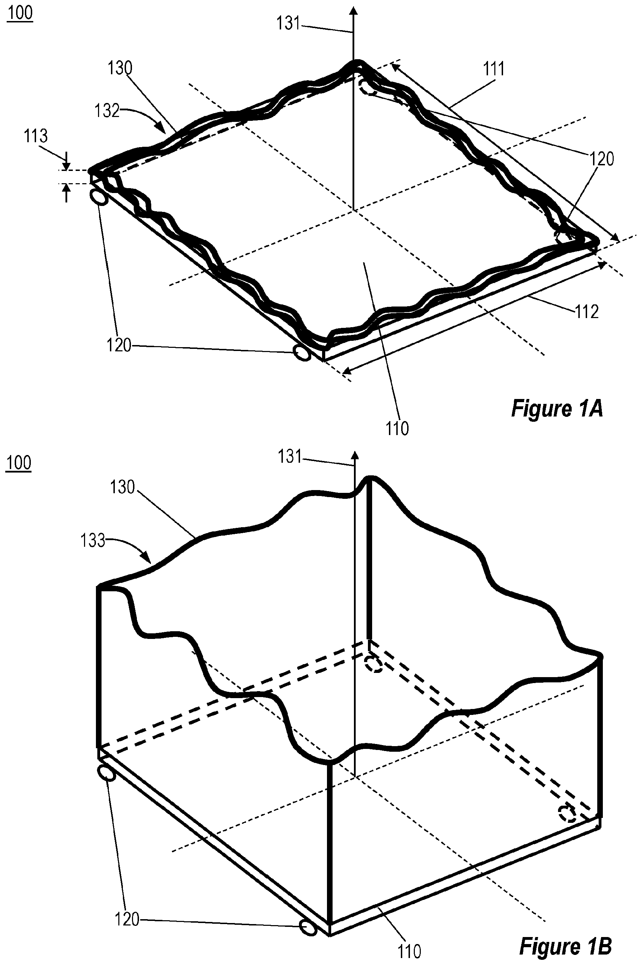

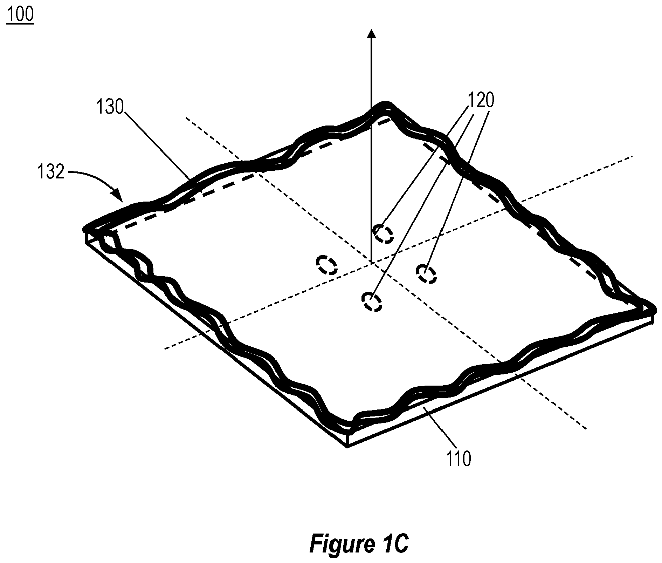

Reference is now made to Figures 1A, 1B and 1C, which are schematic illustrations of a cart 100, according to some embodiments of the invention.

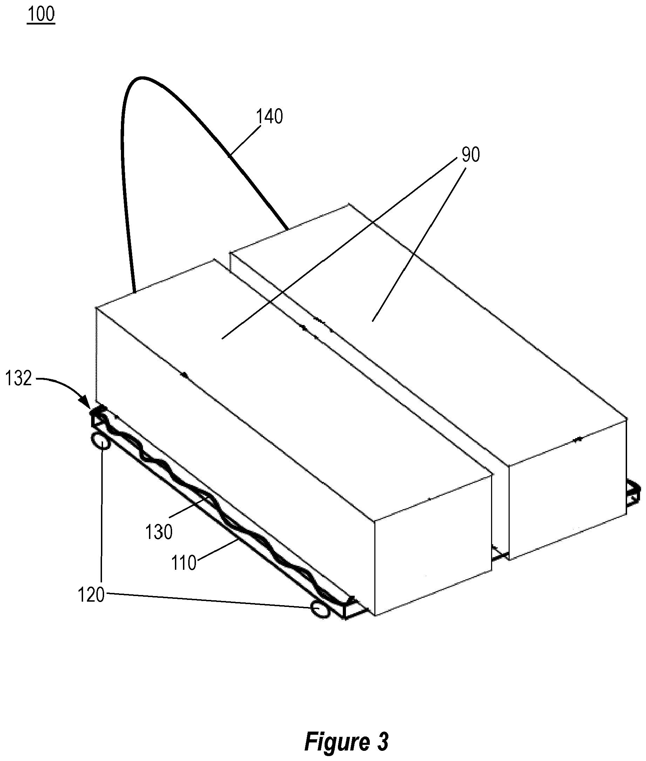

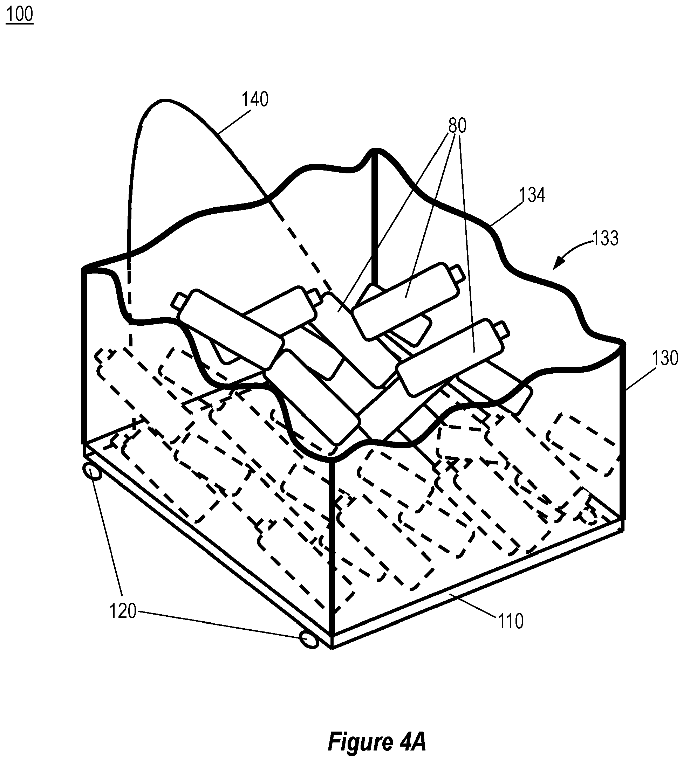

According to some embodiments, cart 100 may include a flat base 110. Flat base 110 may be adapted to receive and accommodate various loads having various dimensions (e.g., as described below with respect to Figures 3 and Figures 4A-4C).

Flat base 110 may have predetermined shape and dimensions. In some embodiments, flat base 110 has a rectangular (or substantially rectangular) shape (e.g., as shown in Figures 1A, 1B and 1C). It should be appreciated that flat base may have any other shape. In various embodiments, flat base 110 may have a length 111 ranging between, for example, 30-150 cm, a width 112 ranging between, for example, 30-150 cm and a thickness 113 of up to, for example, 2 cm. In some embodiments, thickness 113 may, for example, depend on a material of flat base 110. For example, the stronger the material of flat base 110 is, the smaller thickness 113 may be used. It would be apparent to those skilled in the art that cart 100 may also different dimensions.

In some embodiments, the shape and dimensions of flat base 110 may be determined to enable storage of cart 100 within, for example, a trunk of a family car. For example, flat base 110 may include at least one connector arranged to connect flat base 110 (and cart 100) to, for example, a dedicated support installed within the vehicle (e.g., in or below the trunk).

According to some embodiments, cart 100 may include at least three wheels 120 coupled to a first side (herein after the bottom side) of flat base 110. For example, Figures 1A, 1B and 1C show cart 100 that includes four wheels 120. Wheels 120 may be coupled to flat base 110 using any means known in the art.

In some embodiments, at least some of wheels 120 may be coupled along a circumference (or substantially along circumference) of flat base 110 (e.g., as shown in Figures 1A and 1B) to provide maximal stability to the cart, especially when loaded. In some embodiments, at least some wheels 120 may be coupled at a center portion of flat base 110 (e.g., as shown in Figure 1C).

The position of wheels 120 with respect to flat base 110 may be determined to, for example, ensure balance/stability of cart 100 (or flat base 110) when carrying/transporting loads while providing cart 100 with a good maneuverability and/or ability to approach and overcome various obstacles (e.g., climbs, climb-downs, edges of sidewalks, etc.).

In some embodiments, wheels 120 may have a diameter ranging between, for example, 2-10 cm. At least some of wheels 120 may be swivel wheels, to enable easy steering of cart 100. In some embodiments, some of wheels 120 may not swivel, to enhance the ability of cart 100 to keep on track when pulled along.

According to some embodiments, cart 100 may include a flexible casing 130. Flexible casing 130 may be coupled to flat base 110 along a circumference (or substantially along the circumference) of flat base 110. In various embodiments, flexible casing 130 may be affixed to flat base 110 or removably connectable to flat base 110 using any connectors known in the art.

Flexible casing 130 may be extendable/unfoldable with respect to flat base 110 between a first casing position 132 (e.g., collapsed/folded position, as shown in Figures 1A) and a second casing position 133 (e.g., extended/unfolded position, as shown in Figure 1B) in a direction 131 that is perpendicular (or substantially perpendicular) to flat base 110.

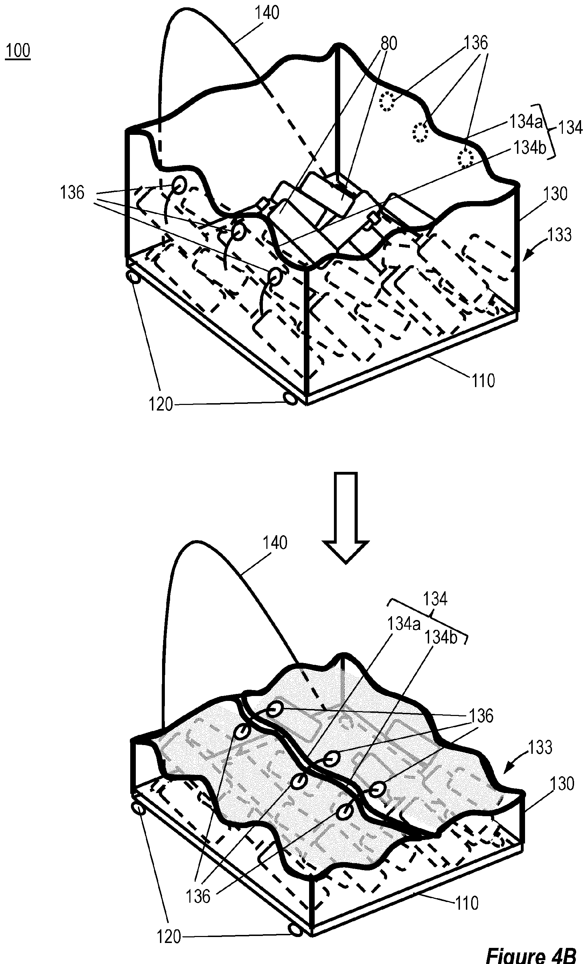

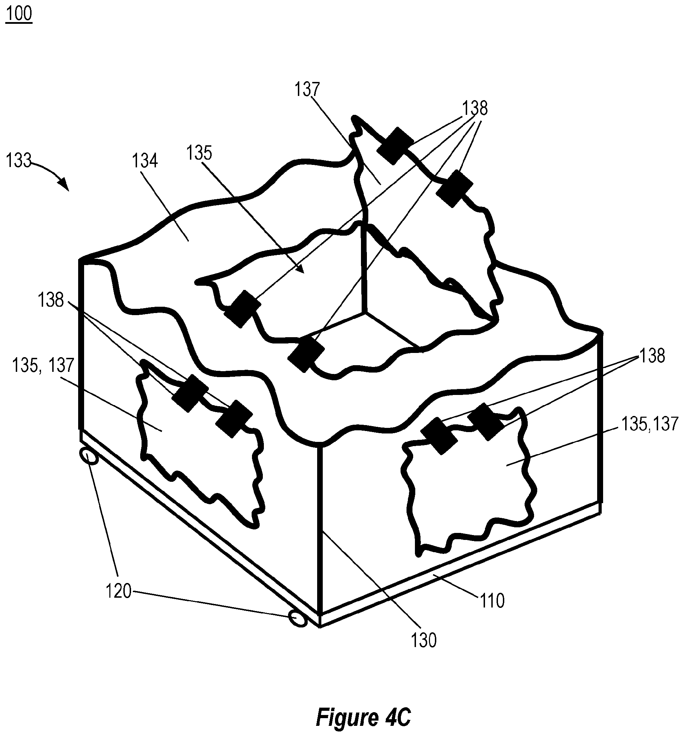

In various embodiments, flexible casing 130 may be adapted to at least partly envelope/receive/accommodate items accommodated on flat base 110/in a space defined by flexible casing 130 and flat base 110 (e.g., when flexible casing 130 is in second casing position 133) to, for example, prevent falling of the items thereof from cart 100 during carrying/transportation (e.g., as described below with respect to Figures 4A and 4B). In some embodiments, flexible casing 130 may include at least one opening through which the items may be inserted/removed into/from the space defined by flexible casing 130 (in second position 133) and flat base 110 (e.g., as described below with respect to Figure 4C).

Flexible casing 130 may be made from extendable/flexible material (e.g., rubber) and/or from foldable material (e.g., fabric material). In some embodiments, flexible casing 130 may be a net/mesh (not shown).

Flexible casing 130 may have specified casing parameters. The specified casing parameters may, for example, include mechanical properties and/or thickness of flexible casing 130. The specified casing parameters may be determined to provide flexible casing 130 with a desired flexibility and/or foldability measure(s), to thereby ensure that, when flexible casing 130 is in first casing position 132 (e.g., collapsed/folded position, as shown in Figure 1A), it adds negligible thickness to a total thickness of cart 100 above predetermined thickness 113 of flat base 110. In some embodiment, when flexible casing 130 is in first casing position 132, it employs a layer above flat base 110, wherein a thickness of the layer is no more than 15% of thickness 113 of flat base 110.

The following illustrations and description depict examples for cart 100 with various embodiments of wheels 120, flexible casing 130 and foldable handle 140. Each of carts 100 may be implemented using any embodiment of wheels 120, flexible casing 130 and foldable handle 140 described below according to the cart's 100 specifications, under constraints resulting from manufacturing issues but not from conceptual issues.

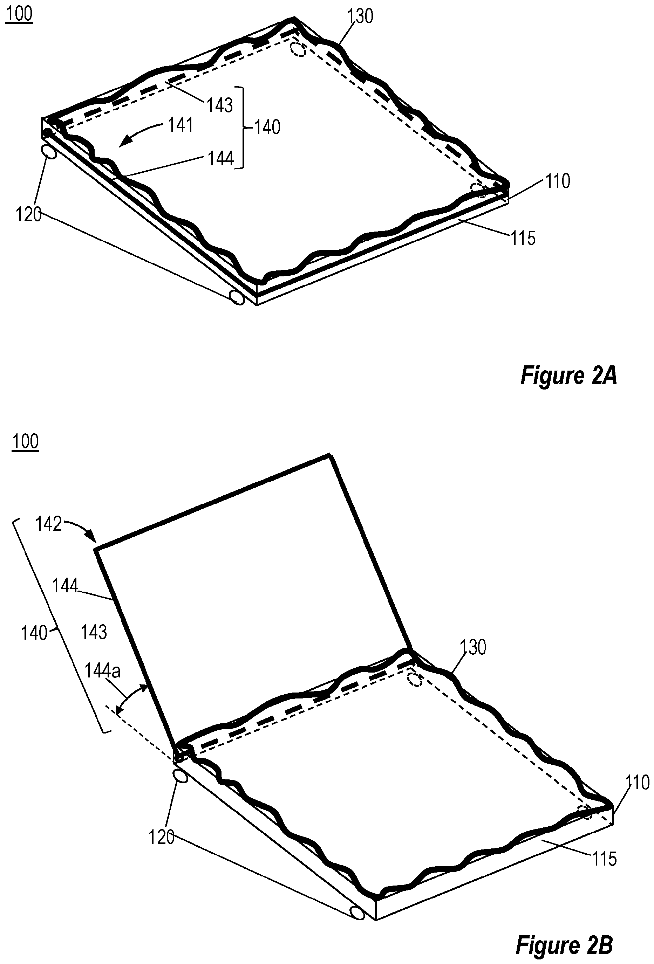

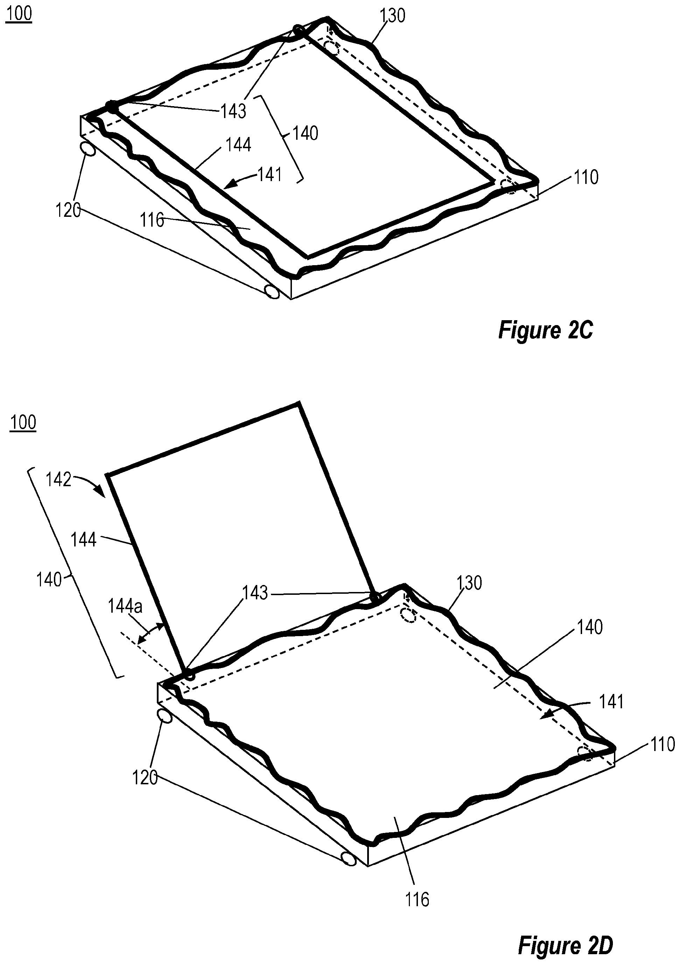

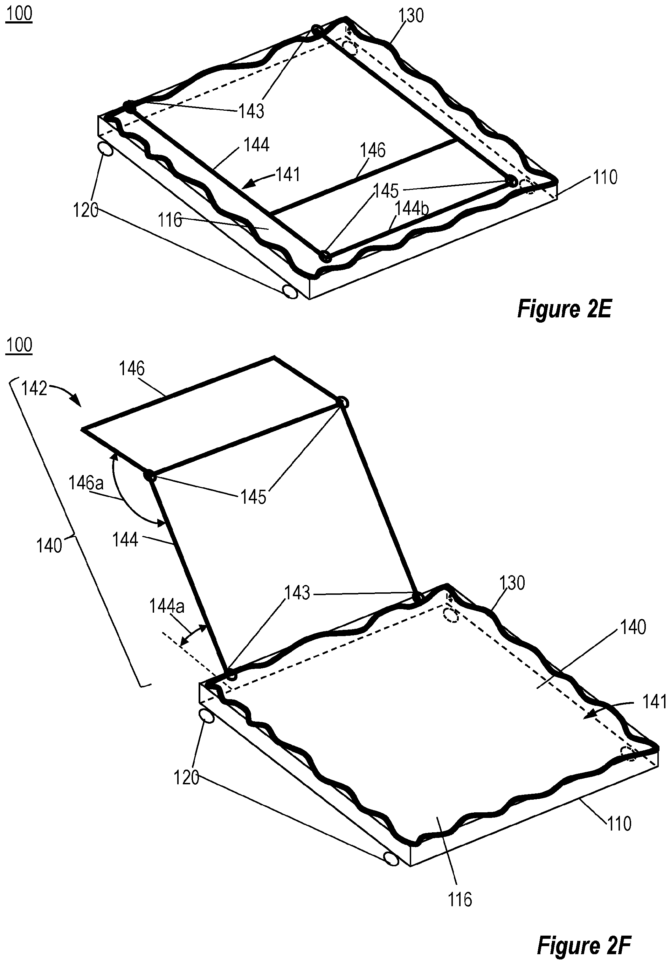

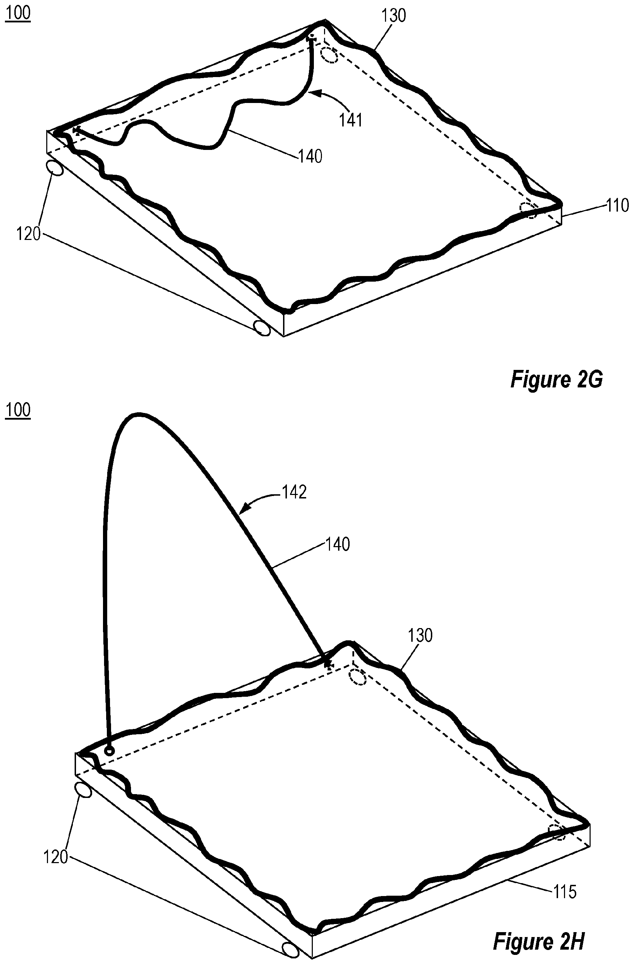

Reference is now made to Figures 2A and 2B, Figures 2C and 2D, Figures 2E and 2F, and Figures 2G and 2H, which are schematic illustrations of various configurations of a handle 140 for a cart, such as cart 100, according to some embodiments of the invention.

According to some embodiments, cart 100 may include a handle 140 coupled to flat base 110. Handle 140 may be switchable between a first handle (collapsed/folded) position 141 and a second (extended/unfolded) handle position 142.

Handle 140 may have predetermined shape and dimensions. The shape and dimensions of handle 140 and the coupling of handle 140 to flat base 110 may be determined to ensure that when handle 140 is in first handle position 141 (e.g., as shown in Figure 2A) it does not add (or substantially does not add) or adds negligible thickness (e.g., of up to 15%) to a total thickness of cart 100 above predetermined thickness 113 of flat base 110.

According to some embodiments, handle 140 may, for example, include a handle-frame 144 pivotally coupled to flat base 110 using at least one pivot 143 (e.g., as shown in Figures 2A-2F).

In some embodiments, handle-frame 144 may lay along lateral surface 115 of flat base 110 when in first handle position 141, without adding to the total thickness of cart 100 above predetermined thickness 113 of flat base 110 (e.g., as shown in Figures 2A and 2B). Alternatively or complementarily, handle-frame 144 may be collapsed/folded onto a flat surface 116 of flat base 110, for example above collapsed/folded flexible casing 130 (e.g., as shown in Figures 2C and 2D).

Handle-frame 144 may be rotated about pivot(s) 143 from first handle position 141 (e.g., as shown in Figures 2A and 2C) towards second handle position 142 (e.g., as shown in Figures 2D and 2E). In various embodiments, handle-frame 144 may be releasably fixed, manually or automatically (e.g., using any means known in the art), at at least one predetermined angle 144a with respect to flat base 110, when in second handle position 142 (e.g., as shown in Figures 2B and 2D). Predetermined angle 144a may, for example, range between 90-180°.

Frame 140 may be further used to pull/push cart 100 when in second handle position 142 (e.g., as shown in Figures 2B and 2D).

According to some embodiments, handle 140 may further induce a first handle-frame 144 pivotally coupled to flat base 110 using pivot(s) 143 and a second handle-frame 146 pivotally coupled to a free end 144b of first handle-frame 144 (e.g., using pivot(s) 145) (e.g., as shown in Figures 2E and 2F).

First and second handle-frames 144, 146, respectively, may be collapsed/folded onto/around flat base 110 when in first handle position (e.g., as shown in Figure 2E) without adding (or substantially without adding) to thickness 113 of flat base 110. First and second handle-frames 144, 146, respectively, may be further unfolded into second handle position 142 (e.g., as shown in Figure 2F).

In various embodiments, first handle frame 144 may be releasably fixed, manually or automatically (e.g., using any means known in the art), at at least one predetermined angle 144a with respect to flat base 110, when in second handle position 142 (e.g., as shown in Figure 2F). Predetermined angle(s) 144a may, for example, range between 90-180°. In various embodiments, second handle frame 146 may be releasably fixed, manually or automatically (e.g., using any means known in the art), at at least one predetermined angle 146a with respect to first handle-frame 144 (e.g., as shown in Figure 2F). Predetermined angle(s) 146a may, for example, range between 0-360°.

According to some embodiments, handle 140 may be made of a flexible material, such as a rope or a chain coupled to flat base 110 (e.g., as shown in Figures 2G and 2H). In these embodiments, rope/chain 140 may be collapsed/folded onto flat base 110 when in first handle position 141 (e.g., as shown in Figure 2G). It should be understood that the thickness of the rope/chain will not add (or substantially not add) to the total thickness of cart 100 above predetermined thickness 113 of flat base 110 when in first handle position 141. Rope/chain 140 may be unfolded towards second handle position 142 and further used to pull cart 100 (e.g., as shown in Figure 2H).

Reference is now made to Figure 3, which is a schematic illustration of a cart 100 carrying relatively large load as compared to dimensions of cart 100, according to some embodiments of the invention.

According to some embodiments, cart 100 may be adapted to carry/transport relatively large items 90 as compared to dimensions of flat base 110 (e.g., as shown in Figure 3). For example, flexible casing 130 may be collapsed/folded into first casing position 132 adjacent to flat base 110. In these embodiments, relatively large items 90, such as planks, packings, boxes, may be loaded on flat base 110 over collapsed/folded flexible casing 130.

Reference is now made to Figures 4A, 4B and 4C, which are schematic illustrations of a cart 100 including various configurations of a flexible casing 130 and carrying multiple items 80, according to some embodiments of the invention.

According to some embodiments, cart 100 may be adapted to carry/transport multiple relatively small items 80 as compared to dimensions of flat base 110 (e.g., as shown in Figures 4A, 4B and 4C).

In some embodiments, a free end 134 of flexible casing 130 may be an open end (e.g., as shown in Figures 4A and 4B). In these embodiments, multiple supermarket items 80 may be loaded onto flat base 110, and flexible casing 130 may be extended/unfolded from first casing position 132 towards second casing position 133 to thereby envelope multiple items 80 and prevent falling of items 80 during carrying/transportation (e.g., as shown in Figure 4A).

In some embodiments, free end 134 of flexible casing 130 may be folded over multiple items 80 being accommodated on flat base 110 to completely (or substantially completely) cover the items thereof (e.g., as shown in Figure 4B). In these embodiments, flexible casing 130 may further include connectors 136 on, for example, opposite portions 134a, 134b of free end 134, respectively (e.g., as shown in Figure 4B). Connectors 136 may be adapted to interconnect opposite portions 134a, 134b of free end 134, to, for example, prevent collapsing/folding of flexible casing 130 when enveloping multiple items 80 thereof. In some embodiments, connectors 136a, 136b may, for example, include at least one of: zipper, hook and loop connector and/or buckle, etc.

In some embodiments, free end 134 of flexible casing 130 may be a closed end. In these embodiments, flexible casing 130 may include at least one opening 135. Openings 135 may be located on, for example, different faces of flexible casing 130 (e.g., as shown in Figure 4C). In some embodiments, flexible casing 130 may further include corresponding covering(s) 137 arranged to cover opening(s) 135. Opening(s) 135 and covering(s) 137 may include connector(s) 138 (e.g., as shown in Figure 4C). For example, connector(s) 138 may be positioned on edges of opening(s) 135 and covering(s) 137. Connector(s) 138 may be arranged to secure covering(s) 137 to tightly cover opening(s) 135. In some embodiments, connector(s) 138 may, for example, include at least one of: zipper, hook and loop connector and/or buckle, etc. In these embodiments, multiple items 80 may be inserted into the space defined by flexible casing 130 (e.g., when in second (extended/unfolded) position 133) and flat base 110 through opening(s) 135.

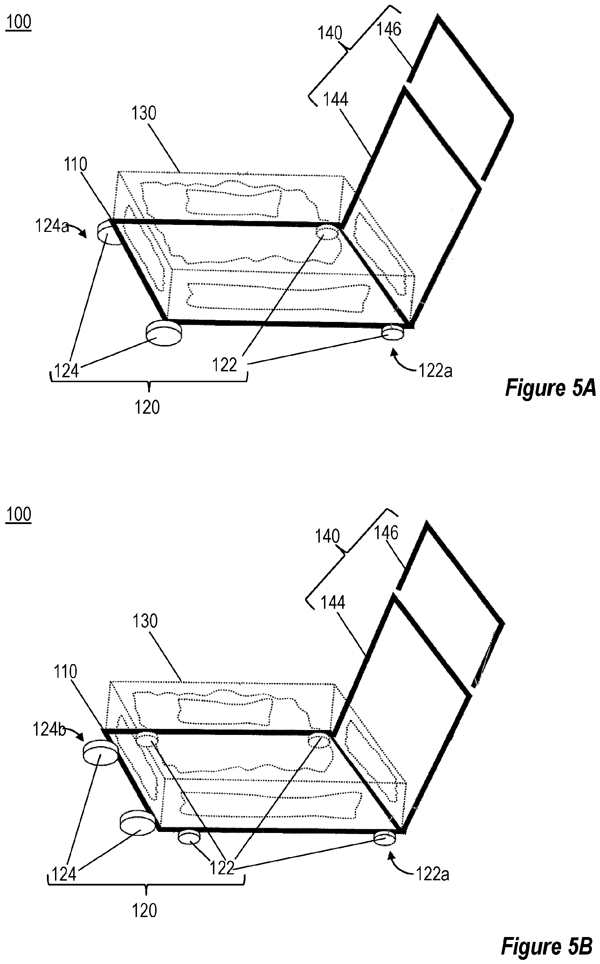

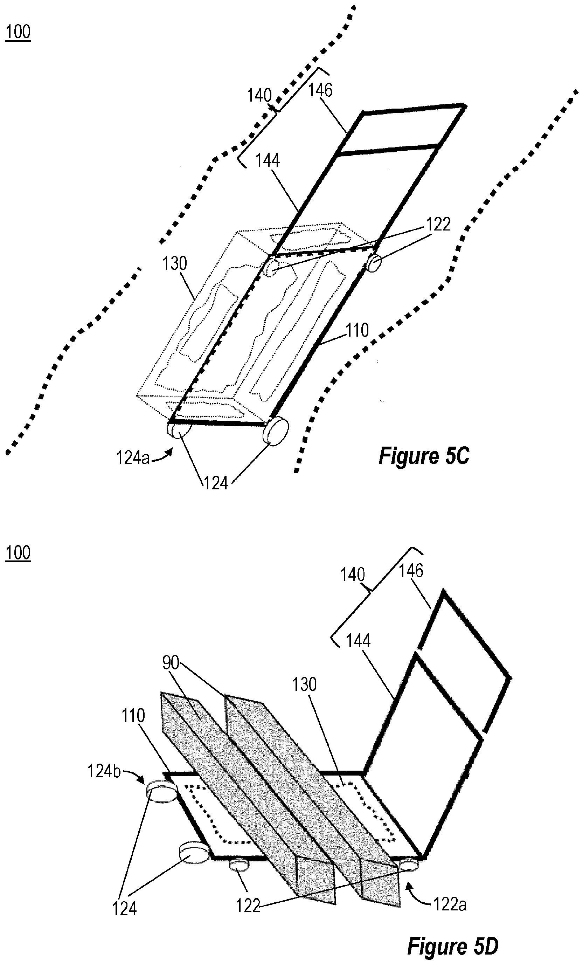

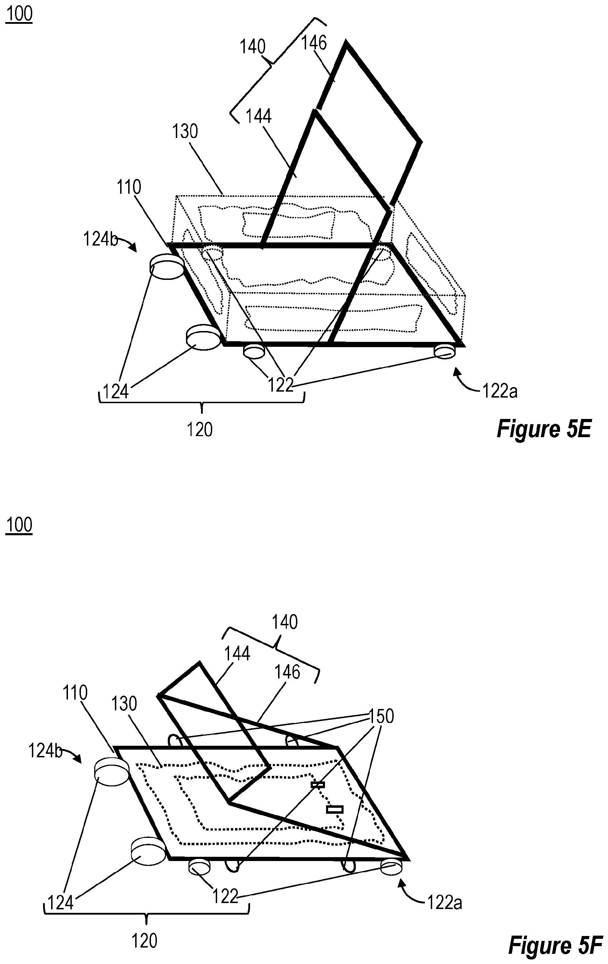

Reference is now made to Figures 5A, 5B, 5C, 5D, 5E and 5F, which are schematic illustrations of a cart 100 including at least two first wheels 122 and at least two second wheels 124, according to some embodiments of the invention.

According to some embodiments, cart 100 may include at least two first wheels 122 and at least two second wheels 124 (e.g., as shown in Figure 5A). In some embodiments, cart 100 may include four first wheels 122 (e.g., as shown in Figure 5B). In various embodiments, first wheels 122 may have a diameter ranging between, for example, 2-5 cm and/or second wheels 124 may have a diameter ranging between, for example, 6-10 cm.

In various embodiments, at least some of: first wheels 122 and/or second wheels 124 may be foldable wheels arranged to be folded (when not is use) and unfolded (when in use). The folding/unfolding of first wheels 122 and/or second wheels 124 may be achieved using any means known in the art. For example, Figure 5A shows first wheels 122 and second wheels 124 in respective unfolded states 122a, 124a, respectively. In another example, Figure 5B shows first wheels 122 in unfolded state 122a and second wheels 124 in a folded state 124b.

In various embodiments, at least some of first wheels 122 and second wheels 124 may be used to carry/transport cart 100 when flat base 110 of cart 100 is parallel (or substantially parallel) to the ground. For example, Figure 5A shows cart 100 being carried on two first wheels 122 and two second wheels 124. In another example, Figure 5B shows cart 100 being carried on four first wheels 122 while two second wheels 124 are in folded state 124b.

In some embodiments, second wheels 124 may be used to carry cart 100 when flat base 110 of cart 100 is at a specified angle with respect to the ground (e.g., as shown in Figure 5C). In these embodiments, cart 100 may be supported by two second wheels 124 only, while first wheels 122 may be folded (not shown) or unfolded (e.g., as shown in Figure 5C).

In some embodiments, flexible casing 130 of cart 100 may be folded/collapsed into first (collapsed/unfolded) state 131 and relatively large load 90 (as compared to dimensions of flat base 110/cart 100) may be loaded on flat base 110, above flexible casing 130 (e.g., as shown in Figure 5D and as described above with respect to Figure 3). In these embodiments, cart 110 may be carried using, for example, four first wheels 110 when flat base 110 is parallel (or substantially parallel) to the ground (e.g., as shown in Figure 5D).

In various embodiments, handle 140 may be coupled to flat base 110 at one of ends of flat base 110 (e.g., as shown in Figures 5A, 5B, 5C, 5D and 5F) or at a specified distance along flat base 110 between the ends thereof (e.g., as shown in Figure 5E).

In some embodiments, cart 100 may include storing-connectors 150 (e.g., as shown in Figure 5F). Storing-connectors 150 may be affixed to, for example, flat base 110. Storing-connectors 150 may be arranged to connect flat base 110/cart 100 to a dedicated support at a storing location such as, for example, trunk of a car, home, etc.

In some embodiments, storing-connectors 150 may, for example, include loops (e.g., as shown in Figure 5F). In these embodiments, the dedicated support may, for example, include hooks, rails, etc. It would be apparent to those skilled in the art that other storing-connectors 150 and dedicated supports may be used.

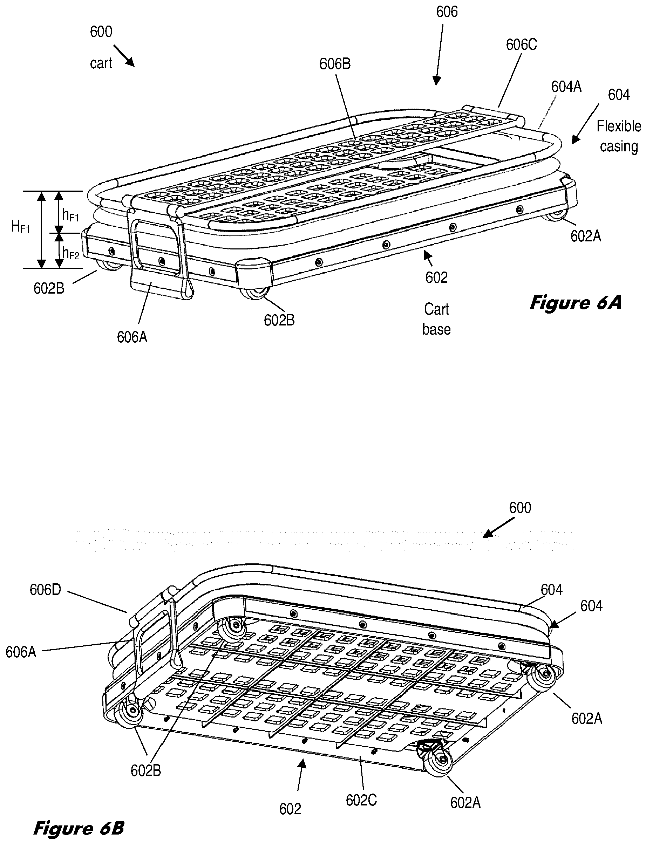

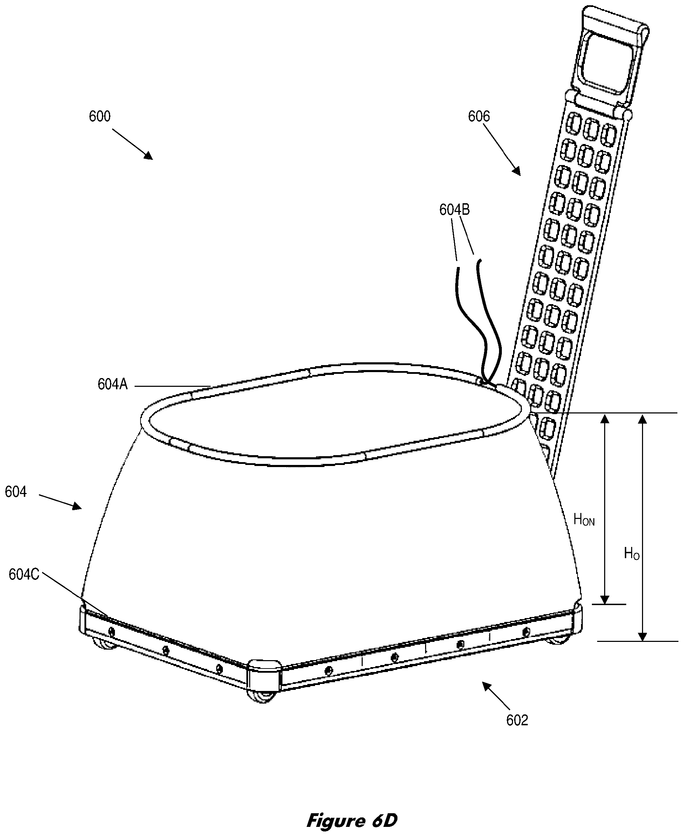

Reference is made now to Figures 6A - 6D, which are schematic isometric views of a foldable cart 600 in four different positions, according to embodiments of the invention. Foldable cart 600 (hereinafter also denoted 'cart') comprises cart base 602, flexible casing 604 and foldable handle 606. Figure 6A depicts cart 600 in a folded position shown from its top. Flexible casing 604 of cart 600 is shown in its folded position. Flexible casing 604 may be made of any flexible sheet, such as strong fabric, s reinforced and elastic sheet based on any kind of polymer material, and the like. Flexible casing 604 may be made as a large and relatively short "sleeve" wherein its lower end may be attached to the outer circumference of the top of cart base 602. The upper end of the "sleeve" may comprise a tube-like structure 604A attached along the edge of the upper end, allowing insertion of a rope or a similar flexible wire through the tube-like structure so that its ends are hanging free each from one end of the structure, as is explained in detail herein below.

Cart base 602 may comprise three or more wheels 602A, 602B, adapted to enable smooth and easy rolling of the cart on a floor, pavement, road and the like, even when it is fully loaded with stuff. In some embodiments some of cart wheels 602A and/or 602B may be swivel wheels, to enable easy turns and direction changes of cart 600 when in movement.

Cart 600 may be equipped with a pull/push foldable handle 606. Handle 606 may be connected to cart base 602 at its lower end by a folding hinge 606C, enabling to fold handle 606 over the top of folded casing 604, as is shown in Figure 6A. In some embodiments handle 606 may fold or bent over a flex bent-axis instead of using a hinge.

When cart 600 is in its folded position, its total height, from the lower end of its wheels 602A, 602B and the top of folded handle 606, is denoted H_{F}. This height may be split to the cart base 602 height h_{F2} and the folded casing and folded handle 606 height h_{F1}. In some embodiments the total folded height, wheels to folded handle, may equal to, or be less than cm. In some embodiments, folded cart 600 may fit, in its main dimensions, and specifically in its total folded height H_{F}, to be kept in a trunk of a family car. The length and width of cart base 602 may be made to fit given intended use. For example, if cart 600 is designed to fit in it folded position in a family car trunk its length may not exceed 70 cm and its width may not exceed 50 cm.

Reference is made now to Figure 6B, that depicts cart 600 in a folded position shown from its bottom. In this projection wheels 602A, 602B are shown. As seen in the embodiment of Figure 6B, wheels 602A, 602B may be located slightly inwardly rom the outer circumference of cart base 602 and the circumference may be enclosed with a protective belt 602C, that is designed to prevent wheels 602A, 602B from hitting nearby objects and get stuck with them. Base 602 may be made of any suitable material and may be equipped with the desired reinforcing structure elements, to provide a desired compromise between self-weight, maximal available load and size. In some embodiments the total self-weight is designed to allow an average adult to carry the folded cart into a car's trunk or out of it in ease, e.g. no more than 7 kg.

In some embodiments foldable handle 606 may be split into two parts - 606A and 606B. Part 606A is located at the free end of handle 606 and part 606B is located between hinge 606C and part 606A. Part 606A may be connected by a hinge 606D to part 606B to allow folding of part 606A over the farther end of cart 606 when in folded position, as shown in Figures 6A and 6B. In some embodiments part 606A may be formed as a handle to enable easy hand hold. In some embodiments part 606A, when folded as seen in Figure 6B, may comprise locking means to lock onto the lower edge of cart base 602, to ensure that cart 600 remains in folded position.

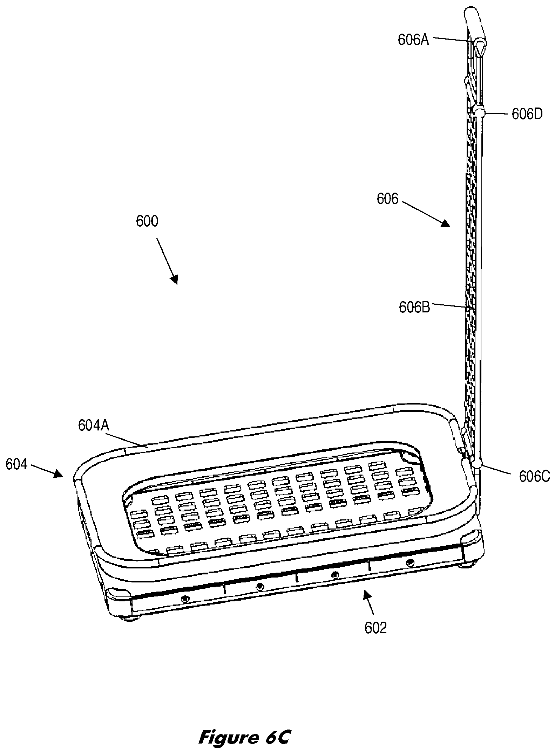

Reference is made now to Figure 6C, which depicts cart 600 in half-opened position, according to embodiments of the invention. When folded cart 600 is to be opened to enable loading it with objects a first step is pulling handle 606 opened to an upright position above cart base 602. In case where part 606A of handle 600 comprises locking means the step shall begin with unlocking the locking means. After handle 606 has been raised, the opening of flexible casing 604 is fully available for inserting / loading / placing objects (such as grocery, shopping goods, etc.) within casing 604. As the stuff in casing 604 piles up flexible casing 604 may be pulled up until it reaches its maximal load height H_{ON}. In order to secure the stuff in casing 604, rope/string 604B may be pulled to close upper opening of casing 604 until flexible casing 604 securely encompasses the content inside it, and then it may be tied, or otherwise be fixedly connected to each other. When flexible casing 604 is extended to enclose its maximal content volume and reaches its maximal open-net height H_{ON}, the maximal height of the cart from the ground is Ho. the length o handle 606 may be designed to allow for easy and convenient pulling of fully loaded cart without having to bend or otherwise deviate from a convenient and natural body position. The loaded cart may be transported from one location, e.g. exit of a store, to another location, e.g. the parking place of the user's car, by pulling it by handle 606, or the cart may be pushed using the handle, as the case may be.

When the transportation of the cart content comes to end, e.g. when the user reached his car in the parking lot, secure rope 606B may be loosen and the cart's content may be unloaded from the casing 604 until all of the goods / objects were removed from the cart. At this stage the cart may be folded in a reverse order compared with its opening steps, and may be loaded, in its folded position, into the car's trunk, for example.

Advantageously, the disclosed cart may provide a means for conveying purchased goods to and from a vehicle. The cart may occupy a very little room when folded and provides safe and easy conveying facility for the goods when in use. Furthermore, the cart may enable storing it (in its folded position) in, for example, a trunk of a car that is already loaded with goods, by occupying a very little room and being adapted to be placed in the trunk easily.

In the above description, an embodiment is an example or implementation of the invention. The various appearances of "one embodiment", "an embodiment", "certain embodiments" or "some embodiments" do not necessarily all refer to the same embodiments. Although various features of the invention can be described in the context of a single embodiment, the features can also be provided separately or in any suitable combination. Conversely, although the invention can be described herein in the context of separate embodiments for clarity, the invention can also be implemented in a single embodiment. Certain embodiments of the invention can include features from different embodiments disclosed above, and certain embodiments can incorporate elements from other embodiments disclosed above. The disclosure of elements of the invention in the context of a specific embodiment is not to be taken as limiting their use in the specific embodiment alone. Furthermore, it is to be understood that the invention can be carried out or practiced in various ways and that the invention can be implemented in certain embodiments other than the ones outlined in the description above.

The invention is not limited to those diagrams or to the corresponding descriptions. For example, flow need not move through each illustrated box or position, or in exactly the same order as illustrated and described. Meanings of technical and scientific terms used herein are to be commonly understood as by one of ordinary skill in the art to which the invention belongs, unless otherwise defined. While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

## Claims

1. A cart comprising:
a flat base;
at least three wheels coupled to the flat base onto one flat side of it;
a flexible casing coupled to the flat base along a circumference of the flat base, the flexible casing being extendable from the flat base's side opposite to the wheels side, in a direction that is substantially perpendicular to the flat base between a first casing position and a second casing position.

2. The cart of claim 1, wherein the flexible casing folds, in the first casing position, to employ a layer above the flat base, wherein a thickness of the layer is no more than 15% of a thickness of the flat base.

3. The cart of claim 1, wherein the flexible casing comprises at least one opening on at least one of faces of the flexible casing.

4. The cart of claim 3, wherein the flexible casing comprises at least one covering arranged to cover the corresponding at least one opening.

5. The cart of any one of claim 1, further comprising a handle coupled to the flat base, the handle is switchable between a first handle position and a second handle position with respect to the flat base, such that the handle adds to a total thickness of the cart no more than 15% of a thickness of the flat base when in the first handle position.

6. The cart of claim 5, wherein the handle comprises a first handle-frame pivotally coupled to the flat base.

7. The cart of claim 6, wherein the first handle-frame is releasably fixed at at least one first predetermined angle with respect to the flat base, when in the second handle position.

8. The cart of claim 6, wherein the handle further comprises a second handle-frame pivotally coupled to a free end of the first handle frame.

9. The cart of claim 8, wherein the second handle frame is releasably fixed at at least one second predetermined angle with respect to the first handle-frame.

10. The cart of claim 9, wherein the handle is a rope or a chain.

11. The cart of claim 1, comprising at least two first wheels having a diameter ranging between 2-5 cm and at least two second wheels having a diameter ranging between 6-10 cm.

12. The cart of claim 11, wherein at least some of the at least two first wheels and the at least two second wheels are foldable.

13. The cart of claim 1, further comprising at least one storing connector arranged to removably connect the cart to a dedicated support.
